# EUROPÄISCHE PATENTSCHRIFT

(11) **EP 1 357 316 B1**
(45) Veröffentlichungstag und Bekanntmachung des Hinweises auf die Patenterteilung: **07.12.2005**
(21) Anmeldenummer: 03004521.5
(22) Anmeldetag: 28.02.2003
(51) Int. Cl.: F16H 61/32, F16H 61/34, F16H 63/34, F16H 63/20

(54) **Stelleinrichtung**
Transmission actuator
Actionneur pour boite de vitesses

(30) Priorität: 23.04.2002 DE 10217909
(43) Veröffentlichungstag der Anmeldung: 29.10.2003
(73) Patentinhaber: ZF Sachs AG, 97424 Schweinfurt (DE)
(72) Erfinder: Von Levern, Frank, 97273 Kürnach (DE)

(56) Entgegenhaltungen:
- EP-A- 0 377 848
- DE-A- 10 045 729
- DE-A- 10 120 587
- DE-A- 19 723 610
- DE-A- 19 957 304

## Beschreibung

Die vorliegende Erfindung betrifft eine Stelleinrichtung gemäß dem Oberbegriff des Anspruches 1.

Durch die DE 199 57 304 A1 ist eine Stelleinrichtung zur automatisierten Betätigung einer Mehrzahl bewegbarer Betätigungselemente eines Getriebes zum Einlegen und Auslegen von Gängen des Getriebes bekannt. Die Stelleinrichtung weist Stellorgane auf, die für ein Zusammenwirken mit den Betätigungselementen in das Getriebe eingreifen, und zur Auswahl jeweils eines der Betätigungselemente dienen, um mit diesem zusammen zu wirken. Die Betätigungselemente sind hierbei zum Ein- oder Auslegen eines Ganges in Richtung einer Achse verlagerbar, und zudem um diese Achse verschwenkbar.

Ein wesentlicher Aspekt der bekannten Stelleinrichtung ist, dass unmittelbar an der Stelleinrichtung ein Stellorgan vorgesehen, das mit den verschiedenen Betätigungselementen, beispielsweise mit Schaltgabeln des Getriebes, zum Einlegen und Auslegen von Gängen zusammenwirkt und durch seine Bewegung eines dieser Betätigungselemente und somit die diesem Betätigungselement zugeordneten Gänge auswählt. Dies erlaubt einen einfachen Aufbau der Stellvorrichtung, und dadurch geringe montage- und auch betriebsbedingte Probleme.

Wesentlich bei derart ausgebildeten automatisiert arbeitenden Stelleinrichtungen ist, dass in präziser Art und Weise das Stellorgan jeweils so positioniert wird, dass es mit einem bestimmten der Betätigungselemente zum Einlegen oder Auslegen eines Gangs zusammenwirken kann. Aufgrund der bei Fahrzeugen allgemein vorhandenen Bauraumbeschränkungen ist es erforderlich, die verschiedenen Systemkomponenten auf kleinem Raum anzuordnen. Dies birgt die Gefahr, dass bereits geringe Fehlpositionierungen, beispielsweise im Bereich des Stellorgans, dazu führen könnten, dass dieses mit verschiedenen Betätigungselementen gleichzeitig zusammenwirkt.

Aus der DE 198 41 153 A1 ist eine Stelleinrichtung bekannt, durch welche eine aus einem Getriebe herausragende Schaltwelle in Bewegung versetzt werden kann. Die Schaltwelle trägt in ihrem sich im Getriebe selbst erstreckenden Bereich in Zuordnung zu verschiedenen Betätigungselementen, wie z.B. Schaltgabeln, sogenannte Schaltfinger, die durch Bewegung der Schaltwelle zur Auswahl von jeweils einer der Schaltgabeln positioniert werden können und dann durch weitere Bewegung in Zusammenwirkung mit der ausgewählten Schaltgabel gebracht werden können, um einen Gang einzulegen bzw. auszulegen. Um diese Bewegungen zu erlangen, ist zum einen die Schaltwelle um ihre Längsachse drehbar und zum anderen in Richtung ihrer Längsachse verschiebbar. Die Ankopplung der Stelleinrichtung an die Schaltwelle erfolgt über eine Kugelgelenkverbindung. Ein einen Kugelgelenkkopf tragender Stift ist an einem Bauteil vorgesehen, das durch Stellantrieberregung um seine Längsachse drehbar und in Richtung seiner Längsachse verschiebbar ist. Eine Drehung um die Längsachse dieses Bauteils führt durch eine entsprechende Verschwenkung des den Gelenkkopf tragenden Stiftes zu einer Verschiebung eines eine Gelenkpfanne bildenden und an der Schaltwelle in ihrem außerhalb des Getriebes sich erstreckenden Bereich festgelegten Bauteils, wodurch auch die Schaltwelle in ihrer Längsrichtung verschoben wird. Eine Verschiebung des den Gelenkkopf tragenden Bauteils führt zu einer Verschwenkung des die Gelenkpfanne aufweisenden Bauteils und somit auch zu einer Drehung der Schaltwelle um ihre Längsachse.

Die aus der DE 198 41 153 A1 bekannte Anordnung führt vor allem im Bereich der Schnittstelle zwischen der Stelleinrichtung und dem Getriebe, also der die Schaltfinger tragenden Schaltwelle desselben, zu Problemen. Durch die bezüglich der Längsachse der Schaltwelle exzentrische Einwirkung auf diese können Verkantungen erzeugt werden, welche die Durchführung von Stellvorgängen beeinträchtigen können. Ferner ist der Vorgang des Anbindens der Stelleinrichtung an den aus dem Getriebe herausragenden Abschnitt der Schaltwelle schwierig, da das an der Schaltwelle anzubringende und die Gelenkpfanne der Kugelgelenkverbindung bildende Bauteil nachträglich sehr präzise in seiner Lage justiert werden muss. Weiter führt der Einsatz dieser Kugelgelenkverbindung dazu, dass durch die bei Durchführung von Stellvorgängen sich ändernden Hebelverhältnisse entsprechend unterschiedliche Krafteinwirkungen auf die Schaltwelle vorhanden sind, was sich insbesondere bei Erreichen der Endlagen nachteilhaft auswirkt.

Es ist die Aufgabe der vorliegenden Erfindung, eine Stelleinrichtung zur automatisierten Betätigung eines zum Einlegen und Auslegen von Gängen dienenden und eine Mehrzahl bewegbarer Betätigungselemente aufweisenden Getriebes vorzusehen, welche bei einfachem Gesamtaufbau eine präzise Durchführung von Schaltvorgängen jeweils an nur einem einzelnen Betätigungselement gestattet.

Gemäß der vorliegenden Erfindung wird diese Aufgabe gelöst durch eine Stelleinrichtung, bei welcher in präziser Art und Weise das Stellorgan so positioniert wird, dass es jeweils mit einem bestimmten der Betätigungselemente zum Einlegen oder Auslegen eines Gangs zusammenwirken kann. Hierzu wird vorgeschlagen, dass eine wenigstens einem Stellorgan zugeordnete Sicherungsanordnung vorgesehen ist mit wenigstens einem zusammen mit dem Stellorgan verschwenkbaren, in Achsrichtung nicht bewegbaren Sicherungsabschnitt, wobei durch den wenigstens einen Sicherungsabschnitt eine Blockierung des Stellorgans gegen Verschiebebewegung erzeugbar ist, wenn das Stellorgan bei Auswahl von einem der Betätigungselemente durch Verschwenkung des Stellorgans nicht in einer vorbestimmten Auswahlstellung bezüglich des ausgewählten Betätigungselementes ist. Dabei kann beispielsweise vorgesehen sein, dass die Sicherungsanordnung das Stellorgan durch Blockierung der Bewegung wenigstens eines Betätigungselementes blockiert.

Um bei der Bewegung des Stellorgans auch eine entsprechende Bewegung des Sicherungsabschnitts erlangen zu können, wird vorgeschlagen, dass die Sicherungsanordnung ein an der Stelleinrichtungswelle schwenkbar getragenes Sicherungselement mit wenigstens einem Sicherungsabschnitt aufweist. Dabei ist es besonders vorteilhaft, wenn das Sicherungselement durch das Stellorgan verschwenkbar ist, so dass dem Sicherungselement kein eigener Antrieb zugeordnet werden muss und die Bewegung des Sicherungselements immer zwangsweise erfolgt, wenn auch das Stellorgan bewegt wird.

Der Sicherungsabschnitt kann eine Form aufweisen, welche im Wesentlichen der Form eines zum Zusammenwirken mit den Betätigungselementen vorgesehenen Stellabschnittes des Stellorgans entspricht. Ferner kann eine erhöhte Sicherheit dadurch erlangt werden, dass - bezogen auf die Verschieberichtung des Stellorgans - an beiden Seiten des Stellabschnittes ein Sicherungsabschnitt vorgesehen ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine perspektivische Gesamtansicht einer erfindungsgemäßen Stelleinrichtung in Zusammenwirkung mit verschiedenen Betätigungselementen eines Getriebes;
- Fig. 2: eine der Fig. 1 entsprechende Ansicht bei weggelassenem Stelleinrichtungsgehäuse;
- Fig. 3: eine weitere perspektivische Ansicht der erfindungsgemäßen Stelleinrichtung ohne Stelleinrichtungsgehäuse;
- Fig. 4: eine weitere perspektivische Ansicht der erfindungsgemäßen Stelleinrichtung ohne Stelleinrichtungsgehäuse;
- Fig. 5: eine weitere perspektivische Ansicht der erfindungsgemäßen Stelleinrichtung ohne Stelleinrichtungsgehäuse, wobei hier zusätzlich die Zusammenwirkung mit Betätigungselementen des Getriebes erkennbar ist;
- Fig. 6: ein als Segmentzahnrad ausgebildetes Antriebszahnrad der erfindungsgemäßen Stelleinrichtung;
- Fig. 7: eine teilweise im Schnitt dargestellte Ansicht einer ein Stellorgan umfassenden Baugruppe der erfindungsgemäßen Stelleinrichtung.

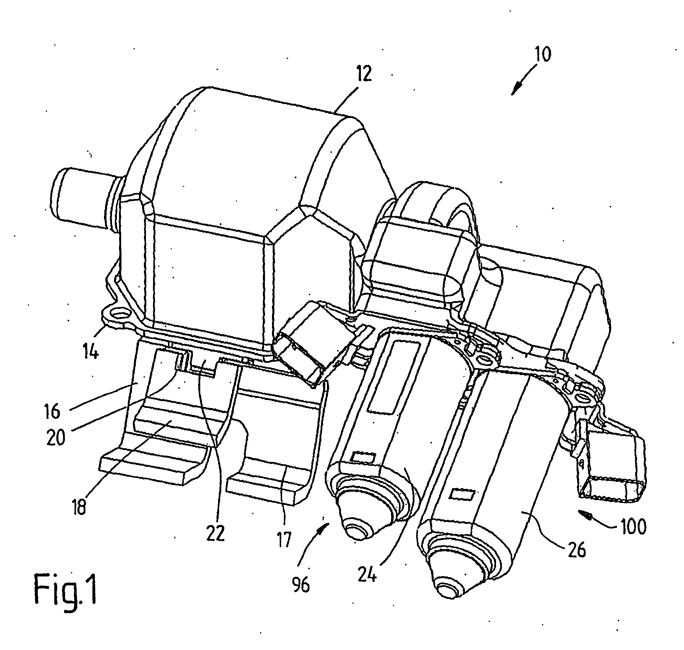

Die Fig. 1 zeigt die perspektivische Gesamtansicht einer erfindungsgemäßen Stelleinrichtung 10. Die Stelleinrichtung 10 umfasst eine allgemein mit 12 bezeichnete Gehäuseanordnung, welche die wesentlichen Bewegungskomponenten der Stelleinrichtung 10 nach außen hin abdeckt und über eine Mehrzahl von Befestigungsstellen 14 in definierter Positionierung an einem Getriebegehäuse festlegbar ist. In dem nicht dargestellten Getriebegehäuse sind dann die verschiedenen Getriebekomponenten vorgesehen, insbesondere auch die in Fig. 1 auch erkennbaren und als Betätigungselemente des Getriebes wirksamen Schaltgabeln 16, 17, 18, 19. Diese Schaltgabeln weisen jeweils eine Aussparung 20 auf, in welche ein nachfolgend noch detaillierter beschriebener und als Stellorgan wirksamer Schaltfinger 22 der Stelleinrichtung 10 eingreifend positionierbar ist. Greift der Schaltfinger 22 in eine dieser Aussparungen 20 ein, so kann er die zugeordnete Schaltgabel 16, 17, 18 oder 19 in deren Längsrichtung verschieben, um bei dieser Verschiebung dann über beispielsweise jeweils eine Synchronisiereinrichtung einen Gang einzulegen oder auszulegen. Um die Bewegung zur Auswahl einer der Schaltgabeln 16, 17, 18 oder 19 erlangen zu können, weist die Stelleinrichtung 10 ferner zwei Elektromotoren 24, 26 auf, deren Wirkung nachfolgend noch detailliert beschrieben wird.

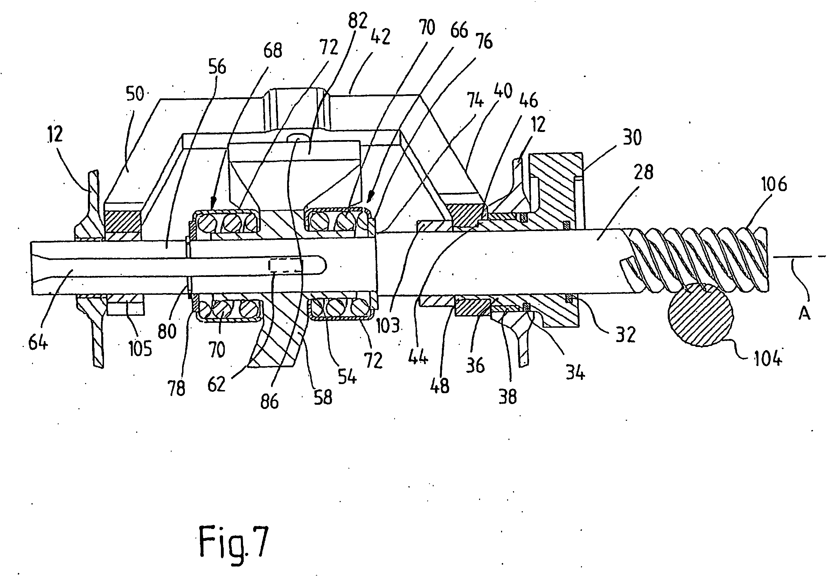

Es wird hierzu zunächst Bezug genommen auf die Fig. 7, welche in Seitenansicht eine Welle 28 der Stelleinrichtung 10 zeigt. Die Welle 28 ist im Gehäuse 12 drehbar gelagert, wobei diese Lagerung vorzugsweise flüssigkeitsdicht ist, um zu verhindern, dass Getriebeöl, das im Verbindungsbereich des Stelleinrichtungsgehäuses 12 mit dem Getriebegehäuse in das Stelleinrichtungsgehäuse 12 gelangen kann, austritt.

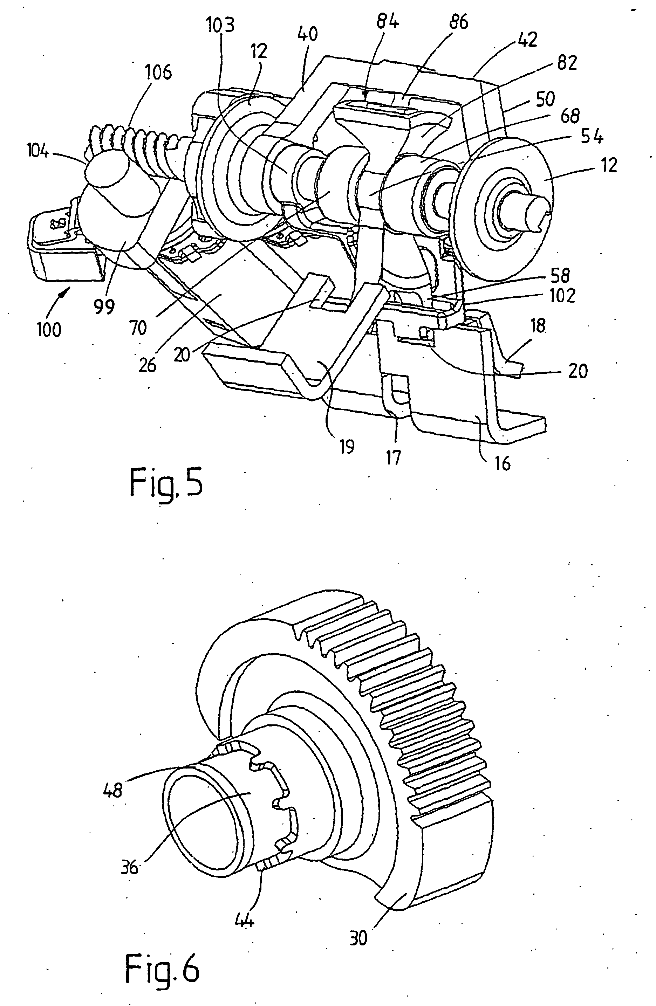

Auf der Welle 28 ist drehbar gelagert ein Antriebszahnrad 30 vorgesehen, welches, wie in Fig. 6 erkennbar, als Segmentzahnrad ausgebildet ist. Um einen fluiddichten Abschluss zur Welle 28 zu erlangen, ist ein beispielsweise O-ringartig ausgebildetes Dichtungselement 32 vorgesehen. Über ein weiteres Dichtungselement 34, das an der Außenumfangsseite eines hülsenartigen Abschnitts 36 des Zahnrads 30 vorgesehen ist, wird ein flüssigkeitsdichter Abschluss zum Gehäuse 12 erlangt. Die Zentrierung des Zahnrads 30 und somit auch der Welle 28 bezüglich des Gehäuses 12 wird durch einen zwischen dem Abschnitt 36 des Zahnrads 30 und dem Gehäuse 12 liegenden Stahlring 38 erlangt. Insbesondere dann, wenn das Zahnrad 30 aus Kunststoff gefertigt ist, ist das Vorsehen weiterer Lagerungsanordnungen, insbesondere zur Lagerung des Zahnrads 30 bezüglich der Welle 28, nicht erforderlich.

Auf dem hülsenartigen Abschnitt 36 des Antriebszahnrads 30 ist ein Endsteg 40 eines im Allgemeinen U-förmig ausgebildeten Führungselementes 42 positioniert. In diesem hülsenartigen Abschnitt 36 sind an dem Antriebszahnrad 30 mehrere sowohl axial als auch radial vorstehende Zähne 44 ausgebildet, die in zugeorndete Aussparungen 46 an dem Endsteg 40 des Führungselements 42 eingreifen und somit eine drehfeste Verbindung des Führungselements 42 mit dem Antriebszahnrad 30 herstellen. Um für einen definierten axialen Zusammenhalt zu sorgen, kann an dem hülsenartigen Abschnitt 36 des Zahnrads 30 ein nach radial außen greifender, z.B. in Umfangsrichtung umlaufender Rastvorsprung 48 vorgesehen sein, welcher nach axialem Aufschieben des Führungselements 42 auf das Zahnrad 30 in eine zugeordnete Aussparung im Endsteg 40 eingreift. Es wird auf diese Art und Weise sowohl in axialer Richtung als auch in Umfangsrichtung ein fester Zusammenhalt des Antriebszahnrads 30 mit dem Führungselement 42 erlangt. Mit seinem anderen Endsteg 50 ist das Führungselement 42 ebenfalls auf der Welle 28 drehbar getragen. Man erkennt in Fig. 7, dass die Erstreckungslänge des Führungselements 42 in Richtung einer Längsachse A der Welle 28 im Wesentlichen der freien Länge zwischen den beiden die Welle 28 tragenden Abschnitten des Gehäuses 12 entspricht, so dass das Führungselement 42 und mit diesem auch das im Wesentlichen außerhalb des Gehäuses 12 positionierte Antriebszahnrad 30 in axialer Richtung festgehalten sind.

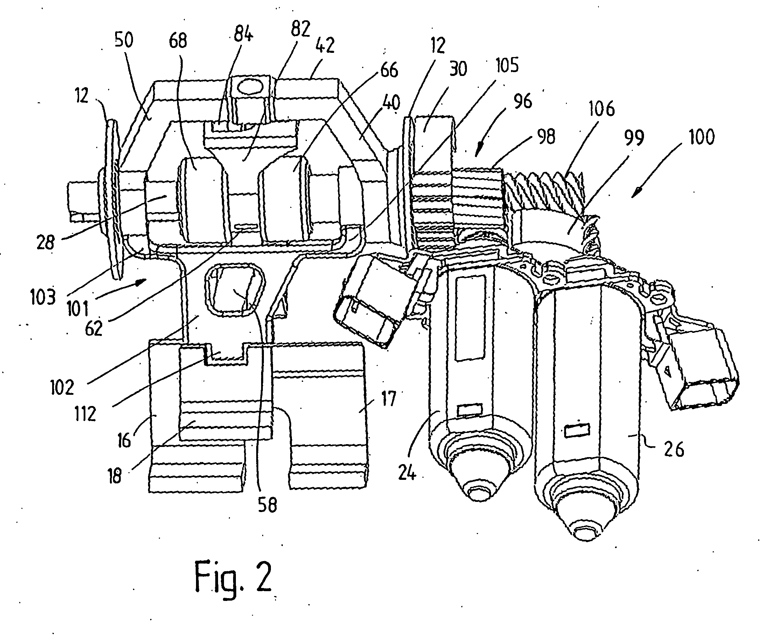

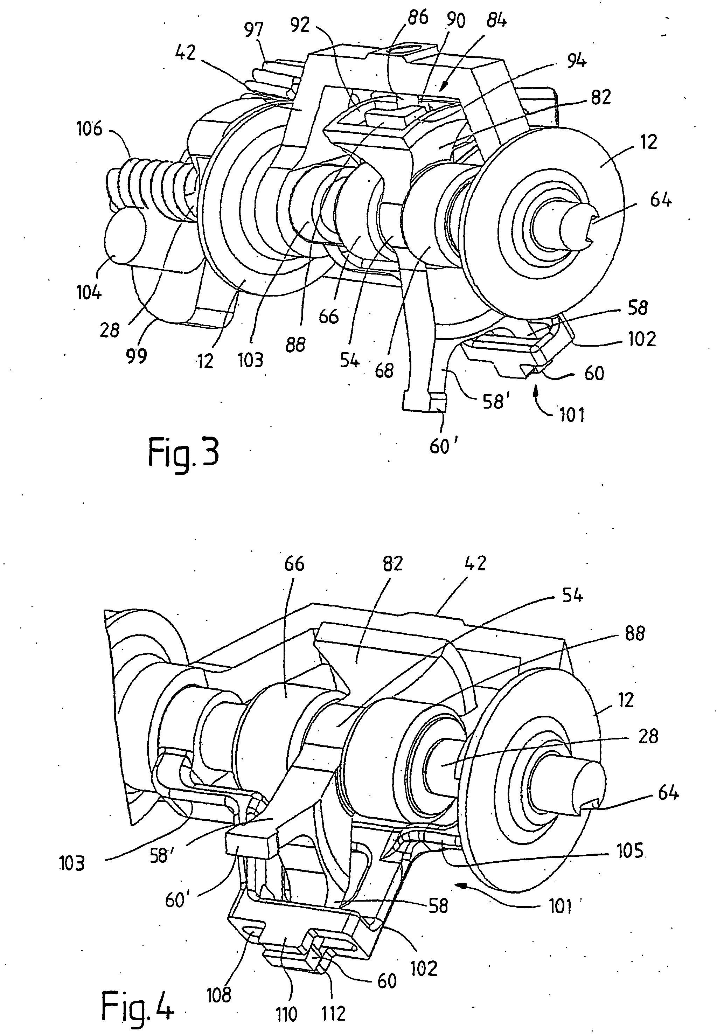

Auf einem mit kleinerem Radius ausgebildeten Abschnitt 56 der Welle 28 ist eine Stellhülse 54 getragen. Die Stellhülse 54 weist, wie man vor allem auch in Fig. 3 und Fig. 4 erkennen kann, zwei nach radial außen greifende Stellorgane 58, 58' auf, die in ihren freien Endabschnitten jeweilige Steilabschnitte 60, 60' zur Zusammenwirkung mit den vorangehend bereits beschriebenen Schaltgabeln 16, 17, 18, 19 aufweisen. Die Stellhülse 54 ist durch ein in Fig. 2 erkennbares Befestigungselement 62, das in eine Außenlängsnut 64 der Welle 28 eingreifend positioniert ist, mit der Welle 28 drehfest verbunden. Über zwei Federpakete 66, 68, die grundsätzlich von gleichem Aufbau sind, ist die Stellhülse 54 in Richtung der Längsachse A an die Welle 28 angekoppelt. Die beiden Federpakete 66, 68 umfassen jeweils eine Schraubendruckfeder 70, die in einem buchsenartigen Gehäuse 72 komprimiert gehalten ist. Die Feder des Federpakets 66 stützt sich an einem stufenartigen Übergang 74 der Welle 28 über einen dort vorgesehenen Stützring 76 in axialer Richtung ab, während das Gehäuse 72 dieses Federpakets 66 sich am anderen axialen Ende an der Stellhülse 54 abstützt. Die Feder 70 des Federpakets 68 stützt sich an einem axialen Ende derselben über einen Stützring 78 an einem an der Welle 28 getragenen Sprengring 80 o. dgl. axial ab. Am anderen axialen Ende stützt sich das Federpaket 68 über das buchsenartige Gehäuse 72 desselben an der Stellhülse 54 ab. Auf diese Art und Weise ist entgegen der Federwirkung der beiden Federn 70 die Stellhülse 54 mit den daran getragenen Stellorganen 58, 58' in geringem Ausmaß bezüglich der Welle 28 verlagerbar. Wenn die Federn hier unter einer bestimmten Vorspannung eingebaut sind, dann kann dafür gesorgt werden, dass zunächst eine bestimmte Axialkraft überwunden werden muss, bevor eine Axialverlagerung der Stellhülse 54 bezüglich der Welle 28 auftritt.

An der Stellhülse 54 ist entweder als integraler Bestandteil oder als separates Element angefügt ein Führungsbahnelement 82 vorgesehen. Dieses weist an seiner nach radial außen liegenden Seite eine beispielsweise in Fig. 3 erkennbare Führungsbahn 84 auf, in welche ein am Führungselement 42 getragener Führungsvorsprung 86 in definierter Art und Weise eingreift. Man erkennt in Fig. 3, dass die Führungsbahn 84 zwei Führungsbahnabschnitte 88, 90 aufweist, von welchen der Führungsbahnabschnitt 88 in Richtung der Längsachse A der Welle 28 sich im Wesentlichen geradlinig erstreckend ausgebildet ist, während der Führungsbahnabschnitt 90 S-förmig geschwungen ausgebildet ist. In ihren beiden axialen Endbereichen sind diese beiden Führungsbahnabschnitte 88, 90 durch jeweilige Verbindungsabschnitte 92, 94 miteinander verbunden, so dass eine durchgehende Führungsbahn 84 erhalten wird.

Die Schwenkbewegung des Führungselements 42 um die Längsachse A der Welle 28 bzw. auch um die dieses Führungselement 42 tragende Welle 28 erfolgt durch einen allgemein mit 96 bezeichneten Führungselementenantrieb. Dieser umfasst den bereits mit Bezug auf die Fig. 1 angesprochenen Elektromotor 24 sowie das in Fig. 7 und Fig. 6 erkennbare Antriebszahnrad 30, wobei das Antriebszahnrad 30 durch ein vom Elektromotor 24 angetriebenes Übertragungszahnrad 98 in Drehung versetzt wird. Das heißt, durch Erregung des Elektromotors 24 wird vermittels des Führungselementenantriebs 96 das Führungselement 42 um die Welle 28 verschwenkt, was zur Folge hat, dass bei in einem axialen Ende von einem der Führungsbahnabschnitte 88, 90 sich befindendem Führungsvorsprung 86 durch Verschwenkung des Führungselementes 42 der Führungsvorsprung 86 entlang einem der Verbindungsabschnitte 92, 94 bewegt wird und somit in den anderen der Führungsbahnabschnitte 88, 90 bewegt werden kann. Das heißt, befindet sich die Führungshülse 54 mit den daran vorgesehenen Organen 58, 58' in einer ihrer axialen Endlagen, welche im Wesentlichen auch dadurch vorgegeben sein können, dass der Führungsvorsprung 86 an einem jeweiligen Ende des zugeordneten Führungsbahnabschnittes 88 oder 90 zur Anlage kommt, so kann durch Verschwenken des Führungselements 42 ein beliebiger der beiden Führungsbahnabschnitte 88, 90 ausgewählt werden.

Um eine Bewegung der Welle 28 erlangen zu können, ist ein allgemein mit 100 bezeichneter Wellenantrieb vorgesehen. Dieser umfasst den bereits mit Bezug auf die Fig. 1 angesprochenen Elektromotor 26, dessen Antriebsbewegung über ein Übertragungszahnrad 99, welches beispielsweise wiederum segmentartig ausgebildet sein kann, und ein Antriebszahnrad 104 auf die Welle 28 übertragen wird. Man erkennt in Fig. 7, dass die Welle 28 in einem ihrer Endbereiche mit einem schneckenartigen Abschnitt 106 ausgebildet ist, mit welchem das Antriebszahnrad 104, das eine entsprechende Verzahnungsform aufweist, in Kämmeingriff steht. Durch Erregung des Elektromotors 26 wird eine Drehbewegung des Antriebszahnrads 104 erzeugt, welches mit der Welle 28 in ihrem schneckenartigen Abschnitt 106 nach Art einer Zahnstange zusammenwirkt und somit zu einer Verlagerung der Welle 28 in Richtung ihrer Längsachse führt. Aufgrund des Bereitstellens der schneckenartigen Verzahnung am Endbereich der Welle 28 wird bei diesem Einleiten einer Axialkraftkomponente gleichzeitig auch eine Umfangskraftkomponente auf die Welle 28 übertragen, so dass diese bei ihrer Axialverlagerung auch versucht, sich zu drehen. Je nachdem, in welchem der Führungsbahnabschnitte 88, 90 der Führungsvorsprung 86 sich befindet, wird eine derartige Drehbewegung der Welle 28 zugelassen oder nicht. Greift der Führungsvorsprung 86 bei Axialverlagerung der Welle 28 in den Führungsbahnabschnitt 88 ein, so kann eine Drehbewegung der Welle 28 und somit auch eine Drehbewegung der Führungshülse 54 mit den daran vorgesehenen Stellorganen 58, 58' nicht auftreten. Befindet sich jedoch der Führungsvorsprung 86 in dem gekrümmt ausgebildeten Führungsbahnabschnitt 90, so wird durch Zusammenwirken des Führungsvorsprungs 86 mit dem Führungsbahnabschnitt 90 zwangsweise eine Drehbewegung der Welle 28 erfolgen, wenn diese sich in Richtung ihrer Längsachse A verlagert, wobei diese Drehbewegung dann unterstützt wird durch die im Bereich des Zusammenwirkens des Zahnrads 104 mit dem Schneckenabschnitt 106 eingeleitete Umfangskraftkomponente. Hier ist vorzugsweise die Schrägstellung des Schneckenabschnitts 106 und des Zahnrads 104 bzw. des Verzahnungsbereichs dieses Zahnrads 104 derart, dass die auf die Welle 28 übertragene Umfangskraftkomponente die durch Zusammenwirkung des Führungsvorsprungs 86 mit dem Führungsbahnabschnitt 90 erzwungene Verdrehung der Welle 28 unterstützt. Bewegt sich also beispielsweise bei dem Zustand der Fig. 3 die Welle 28 zusammen mit der Führungshülse 54 nach links, d.h. in der perspektivischen Ansicht nach hinten, was eine zwangsweise Verschwenkung der Führungshülse 54 bzw. der Stellorgane 58, 58' im Gegenuhrzeigersinn zur Folge hat, so wird eine entsprechende Umfangskraftkomponente auf die Welle 28 übertragen. Entsprechendes gilt dann selbstverständlich auch im entgegengesetzten Sinne, d.h. bei Bewegung in der anderen Richtung.

Bei Durchführung von Schaltvorgängen wird also durch Verschwenkbewegung der Führungshülse 54 zunächst ausgewählt, in welche der Aussparungen 20 eines der als Schaltfinger 22 wirksamen Stellorgane 58, 58' mit seinem Stellabschnitt 60, 60' eingreifend positioniert wird. Diese Verschwenkbewegung kann beispielsweise dadurch erlangt werden, dass bei in den Führungsbahnabschnitt 88 etwa mittig eingreifend positioniertem Führungsvorsprung 86 der Führungselementenantrieb 96 erregt wird, um das Führungselement 42 um die Welle 28 zu schwenken und dabei eine entsprechende Verschwenkbewegung der Stellhülse 54 bzw. der Stellorgane 58, 58' zu erlangen. Greift dann beispielsweise das als Schaltfinger 22 wirksame Stellorgan 58 mit seinem Stellabschnitt 60 in eine Aussparung 20 einer ausgewählten der Schaltgabeln 16, 17 oder 18 ein, kann dann durch Axialverlagerung der Stellhülse 54, ausgelöst durch entsprechende Axialverlagerung der Welle 28, die ausgewählte der Schaltgabeln 16, 17 oder 18 axial verlagert werden, um beispielsweise einen der beiden durch entgegengesetzte Axialverlagerung dieser Schaltgabeln 1 6, 17, 18 ein- bzw. auslegbaren Gänge zu aktivieren. Das heißt also, dass durch die Verschwenkbewegung der Stellorgane 58, 58' eine so genannte Gassenwahl stattfindet, und dass durch eine Verschiebebewegung der Stellorgane 58, 58' bei ausgewählter Gasse dann die Gangwahl bzw. das Einlegen oder Auslegen eines Ganges stattfindet. Soll ein Schaltvorgang von einem Gang in einen anderen Gang stattfinden, die unterschiedlichen Schaltgassen zugeordnet sind, so wird bei eingelegtem Gang durch Verschwenken des Führungselements 42 der Führungsvorsprung 86 entlang einem der Verbindungsabschnitte 92, 94 in den gekrümmten Führungsbahnabschnitt 90 bewegt. Eine nachfolgende Axialverlagerung der Welle 28 mit der Führungshülse 54 und dem Führungsbahnelement 82 führt dann zu der bereits angesprochenen Verschwenkung der Stellorgane 58, 58', wobei im Bereich der Verschwenkung die Gassenwahl stattfindet und in den beiden sich an die Verschwenkung anschließenden geradlinigen Bewegungsbereichen das Einlegen bzw. Auslegen eines Ganges erfolgt.

Bei der erfindungsgemäßen Stelleinrichtung ist ferner eine allgemein mit 101 bezeichnete Sicherungsanordnung vorhanden. Diese Sicherungsanordnung 101 sorgt dafür, dass die zum Einlegen bzw. Auslegen eines Ganges führende Axialverschiebung des Stellorgans 58 nur dann stattfinden kann, wenn dieses korrekt mit einer der Schaltgabeln 16, 17 oder 18, die im Bereich ihrer Aussparungen 20 sehr nahe beieinander liegen, ausgerichtet ist. Eine Axialverlagerung des Stellorgans 58 bei nicht korrekter Ausrichtung hätte zur Folge, dass im Getriebe versucht wird, beispielsweise zwei Gänge einzulegen, was zur Beschädigung von Getriebekomponenten führen kann.

Die Sicherungsanordnung 101 umfasst ein Sicherungselement 102, das in seinen beiden axialen Endbereichen jeweilige Stegabschnitte 103, 105 aufweist. Mit dem Stegabschnitt 103 ist das Sicherungselement 102 im Bereich des Endstegs 40 des Führungselements 42 auf der Welle 28 schwenkbar gelagert. Man erkennt in Fig. 7, dass dieser Stegabschnitt 103 sich axial an den Endsteg 40 des Führungselements 20 bzw. auch an das axiale Ende des Antriebszahnrads 30 anlegt. Der andere Stegabschnitt 105 ist in axialer Richtung im gleichen Bereich an der Welle 28 abgestützt, in welchem auch der Endsteg 50 des Führungselements 42 auf dieser getragen ist. Hier kann der Endsteg 50 den Lagerungsbereich des Stegabschnitts 105 gabelartig umgreifend positioniert sein, wodurch axialer Bauraum eingespart wird. Es ist selbstverständlich, dass bei entsprechend zur Verfügung stehendem Bauraum der Stegabschnitt 105 sich auch axial innen an den Endsteg 50 anlegen könnte.

Das Sicherungselement 102 bildet in seinem von der Welle 28 entfernt liegenden Endabschnitt eine in Richtung der Längsachse A sich erstreckende Bewegungsausnehmung 108, in welcher das Stellorgan 58 in Richtung der Achse A bewegbar aufgenommen ist. An beiden Seiten des Stellabschnitts 60 des Stellorgans 58 liegen Sicherungsabschnitte 110, 112 des Sicherungselements 102, wobei diese Sicherungsabschnitte 110, 112 in ihrer Form an die Form des Stellabschnitts 60 angepasst sind. Da das Sicherungselement 102 grundsätzlich frei schwenkbar auf der Welle 28 getragen ist, führt eine Verschwenkung der Stellhülse 54 mit dem Stellorgan 58 zu einer entsprechenden Verschwenkung des Sicherungselements 102, so dass die Sicherungsabschnitte 110, 112 immer seitlich neben dem Stellabschnitt 60 liegen. Ferner sind in Richtung der Längsachse A die Sicherungsabschnitte 110, 112 so positioniert, dass sie der neutralen Lage des Stellabschnitts 60 entsprechen, d.h. derjenigen Lage, die der Stellabschnitt 60 einnimmt, um durch Verschwenkung eine der Schaltgassen auszuwählen. Wird der Stellabschnitt 60 dann zur Gassenwahl verschwenkt, verschwenken ebenso auch die Sicherungsabschnitte 110, 112. Greift der Stellabschnitt 60 exakt in eine der Aussparungen 20 ein, so ist dafür gesorgt, dass keiner der Sicherungsabschnitte 110, 112 in diese Aussparung 20 des ausgewählten Betätigungselements bzw. der ausgewählten Schaltgabel 16, 17, 18 eingreift. Der Stellabschnitt 60 kann dann zur Verschiebung einer der Schaltgabeln 16, 17, 18 und zum Einlegen eines Ganges in axialer Richtung verschoben werden. Ist der Stellabschnitt 60 jedoch nicht so positioniert, dass er exakt in die Aussparung 20 der ausgewählten Schaltgabel 16, 17 oder 18 eingreift, so greift zwangsweise auch einer der Sicherungsabschnitte 110, 112 in die nicht exakt mit dem Stellabschnitt 60 ausgerichtete Aussparung 20 ein. Wird dann versucht, den Stellabschnitt 60 in axialer Richtung zu verlagern, so wird diese Verlagerungsbewegung dadurch blockiert, dass das ausgewählte Betätigungselement bzw. die ausgewählte Schaltgabel 16 oder 18 durch den in die Aussparung 20 derselben eingreifenden Sicherungsabschnitt 110, 112 gegen Verschiebebewegung blockiert ist. Es wird dadurch verhindert, dass der Sicherungsabschnitt 20 dann, wenn er nicht vollständig in eine der Aussparungen 20 eingreifend positioniert ist, auch mit einer anderen Aussparung 20 zum Verschieben eines anderen, nicht ausgewählten Betätigungselements zusammenwirken kann.

Um bei Wirksamwerden des in den Figuren erkennbaren weiteren Stellorgans 58', welches beispielsweise zum Einlegen oder Auslegen des Rückwärtsgangs wirksam sein kann, zu verhindern, dass gleichzeitig bei geringer Fehlpositionierung desselben auch das Stellorgan 58 wirksam werden könnte, weist die durch das Stellorgan 58' zu betätigende Schaltgabel 19 bezüglich der anderen Schaltgabeln 16, 17, 18 eine derartige Winkellage auf, dass die Stellhülse 54 so weit verschwenkt werden muss, dass in zuverlässiger Weise das Stellorgan 58 vollständig aus dem Bereich der durch dieses bewegbaren Schaltgabeln 16, 17, 18 herausbewegt ist.

Durch die vorliegende Erfindung wird eine Stelleinrichtung mit sehr kompaktem Aufbau bereitgestellt. Wesentlich hierfür ist, dass keine Schnittstelle zu einer Schaltwelle o. dgl. eines Getriebes bereitgestellt werden muss. Die einzige zu verdrehende und zu verschiebende Welle ist vollständig innerhalb der Stelleinrichtung bzw. des Stelleinrichtungsgehäuses angeordnet. Zur Wechselwirkung mit dem Getriebe ragen nur die als Schaltfinger wirksamen Stellorgane aus dem Stelleinrichtungsgehäuse hervor, um bei Ansetzen des Stelleinrichtungsgehäuses an ein Getriebegehäuse dann in Wechselwirkung mit den zugeordneten Betätigungselementen des Getriebes treten zu können. Dadurch wird vermieden, dass im Bereich der Kraftübertragung Zwängungen und Verkantungen entstehen, die die Positioniergenauigkeit beeinträchtigen. Auch das Zusammenfügen der Stelleinrichtung an sich kann sehr leicht dadurch vorgenommen werden, dass zunächst alle Teile, die auf der Welle der Stelleinrichtung zu tragen oder zu lagern sind, miteinander in Verbindung gebracht werden bzw. ineinander eingefügt werden und dann die Welle hindurchgeführt wird, woraufhin dann die Arretierung durch den vorangehend angesprochenen Sprengring erfolgen kann.

Ein weiterer Vorteil der erfindungsgemäßen Stelleinrichtung liegt in der Axialbewegbarkeit der Stellhülse bzw. der Stellorgane bezüglich der diese tragenden Welle durch Einsatz der angesprochenen Federpakete. Somit werden vor allem bei Erreichen von Endanschlägen oder bei spontanen Beschleunigungen sanfte Bewegungsübergänge erhalten und stoßartige Belastungen im Verbindungsbereich verschiedener Komponenten vermieden.

Ein weiterer Vorteil der erfindungsgemäßen Ausgestaltung einer Stelleinrichtung ist, dass auch die zum Erhöhen der Sicherheit dienenden Komponenten vollständig in die Stelleinrichtung selbst integriert sind.

## Patentansprüche

1. Stelleinrichtung zur automatisierten Betätigung eines zum Einlegen und Auslegen von Gängen eine Mehrzahl bewegbarer Betätigungselemente (16, 17, 18, 19) aufweisenden Getriebes, wobei die Stelleinrichtung (10) wenigstens ein in das Getriebe zur Zusammenwirkung mit den Betätigungselementen (16, 17, 18, 19) eingreifend positioniertes oder zu positionierendes Stellorgan (58, 58') aufweist, das zur Auswahl von einem der Betätigungselemente (16, 17, 18, 19) zur Zusammenwirkung mit diesem beziehungsweise zur Bewegung von einem der Betätigungselemente (16, 17, 18, 19) zum Einlegen beziehungsweise zum Auslegen eines Ganges in Richtung einer Achse (A) verlagerbar und um die Achse (A) verschwenkbar ist,
**gekennzeichnet durch**
eine wenigstens einem Stellorgan (58) zugeordnete Sicherungsanordnung (101) mit wenigstens einem zusammen mit dem Stellorgan (58) verschwenkbaren, in Achsrichtung nicht bewegbaren Sicherungsabschnitt (110, 112), wobei **durch** den wenigstens einen Sicherungsabschnitt (110, 112) eine Blockierung des Stellorgans (58) gegen Verschiebebewegung erzeugbar ist, wenn das Stellorgan (58) bei Auswahl von einem der Betätigungselemente (16, 17, 18) **durch** Verschwenkung des Stellorgans (58) nicht in einer vorbestimmten Auswahlstellung bezüglich des ausgewählten Betätigungselementes (16, 17, 18) ist.

2. Stelleinrichtung nach Anspruch 1,
**dadurch gekennzeichnet, dass** die Sicherungsanordnung (101) das Stellorgan (58) durch Blockierung der Bewegung wenigstens eines Betätigungselementes (16, 17, 18) blockiert.

3. Stelleinrichtung nach Anspruch 1 oder 2,
**dadurch gekennzeichnet, dass** die Sicherungsanordnung (101) ein an der Stelleinrichtungswelle (28) schwenkbar getragenes Sicherungselement (102) mit wenigstens einem Sicherungsabschnitt (110, 112) aufweist.

4. Stelleinrichtung nach Anspruch 3,
**dadurch gekennzeichnet, dass** das Sicherungselement (102) durch das Stellorgan (58) verschwenkbar ist.

5. Stelleinrichtung nach Anspruch 3 oder 4,
**dadurch gekennzeichnet, dass** der wenigstens eine Sicherungsabschnitt (110, 112) eine Form aufweist, welche im Wesentlichen der Form eines zum Zusammenwirken mit den Betätigungselementen (16, 17, 18) vorgesehenen Stellabschnittes (60) des Stellorgans (58) entspricht.

6. Stelleinrichtung nach Anspruch 5,
**dadurch gekennzeichnet, dass** - bezogen auf die Verschieberichtung des Stellorgans (58) - an beiden Seiten des Stellabschnittes (60) ein Sicherungsabschnitt (110, 112) vorgesehen ist.

## Claims

1. Actuating device for the automated actuation of a gear mechanism which has a plurality of movable actuating elements (16, 17, 18, 19) for engaging and disengaging gears, the actuating device (10) having at least one operating member (58, 58') which is positioned or is to be positioned so as to engage into the gear mechanism for interaction with the actuating elements (16, 17, 18, 19) and can be displaced in the direction of an axis (A) and can be pivoted about the axis (A) for the selection of one of the actuating elements (16, 17, 18, 19) for interaction with the said actuating element or to move one of the actuating elements (16, 17, 18, 19), for the engagement or disengagement of a gear, **characterized by** a securing arrangement (101) which is assigned to at least one operating member (58), having at least one security section (110, 112) which can be pivoted together with the operating member (58) and cannot move in the axial direction, it being possible to produce locking of the operating member (58) by means of the at least one securing section (110, 112) against a displacement movement, if the operating member (58) is not in a predefined selection position with regard to the selected actuating element (16, 17, 18) when one of the actuating elements (16, 17, 18) is selected by the operating member (58) being pivoted.

2. Actuating device according to Claim 1, **characterized in that** the securing arrangement (101) locks the operating member (58) by locking of the movement of at least one actuating element (16, 17, 18).

3. Actuating device according to Claim 1 or 2, **characterized in that** the securing arrangement (101) has a securing element (102) which is held pivotably on the actuating-device shaft (28) and has at least one securing section (110, 112).

4. Actuating device according to Claim 3, **characterized in that** the securing element (102) can be pivoted by the operating member (58).

5. Actuating device according to Claim 3 or 4, **characterized in that** the at least one securing section (110, 112) has a shape which substantially corresponds to the shape of an actuating section (60) of the operating member (58), which actuating section (60) is provided for interaction with the actuating elements (16, 17, 18).

6. Actuating device according to Claim 5, **characterized in that** a securing section (110, 112) is provided on both sides of the actuating section (60), in relation to the displacement direction of the operating member (58).

## Revendications

1. Dispositif d'asservissement pour l'actionnement automatique d'une boîte de vitesses présentant une pluralité d'éléments d'actionnement mobiles (16, 17, 18, 19) pour enclencher et désenclencher des rapports, sachant que le dispositif d'asservissement (10) présente au moins un organe d'asservissement (58, 58') positionné ou à positionner en engagement dans la boîte pour coopérer avec les éléments d'actionnement (16, 17, 18, 19), organe qui peut être déplacé dans la direction d'un axe (A) et pivoté autour de l'axe (A) afin de sélectionner un des éléments d'actionnement (16, 17, 18, 19) pour coopérer avec cet élément ou encore afin de déplacer un des éléments d'actionnement (16, 17, 18, 19) pour enclencher ou désenclencher un rapport, **caractérisé par** un moyen de verrouillage (101) associé à au moins un organe d'asservissement (58) et doté d'au moins une partie de verrouillage (110, 112) pouvant être pivotée conjointement avec l'organe d'asservissement (58) mais ne pouvant pas être déplacée en direction axiale, la partie de verrouillage au moins unique (110, 112) permettant de bloquer l'organe d'asservissement (58) pour empêcher son déplacement en translation si l'organe d'asservissement (58), lors de la sélection d'un des éléments d'actionnement (16, 17, 18) par pivotement de l'organe d'asservissement (58), ne se trouve pas dans une position prédéfinie de sélection par rapport à l'élément d'actionnement sélectionné (16, 17, 18).

2. Dispositif d'asservissement selon la revendication 1, **caractérisé en ce que** le moyen de verrouillage (101) bloque l'organe d'asservissement (58) en bloquant le mouvement d'au moins un élément d'actionnement (16, 17, 18).

3. Dispositif d'asservissement selon la revendication 1 ou 2, **caractérisé en ce que** le moyen de verrouillage (101) présente un élément de verrouillage (102) porté à pivotement sur l'arbre (28) du dispositif d'asservissement et doté d'au moins une partie de verrouillage (110, 112).

4. Dispositif d'asservissement selon la revendication 3, **caractérisé en ce que** l'élément de verrouillage (102) peut être pivoté par l'organe d'asservissement (58).

5. Dispositif d'asservissement selon la revendication 3 ou 4, **caractérisé en ce que** la partie de verrouillage au moins unique (110, 112) présente une forme qui correspond pour l'essentiel à la forme d'une partie d'asservissement (60) de l'organe d'asservissement (58) qui est prévue pour coopérer avec les éléments d'actionnement (16, 17, 18).

6. Dispositif d'asservissement selon la revendication 5, **caractérisé en ce qu'**une partie de verrouillage (110, 112) est prévue de part et d'autre - par rapport à la direction de translation de l'organe d'asservissement (58) - de la partie d'asservissement (60).
